# EUROPÄISCHE PATENTSCHRIFT

(11) **EP 2 248 236 B1**
(45) Veröffentlichungstag und Bekanntmachung des Hinweises auf die Patenterteilung: **04.07.2012**
(21) Anmeldenummer: 10703251.8
(22) Anmeldetag: 28.01.2010
(51) Int. Cl.: H02B 11/167

(54) **MITTEL- ODER HOCHSPANNUNGSSCHALTANLAGE**
MEDIUM- OR HIGH-VOLTAGE SWITCHGEAR
INSTALLATION DE DISTRIBUTION ÉLECTRIQUE MOYENNE OU HAUTE TENSION

(30) Priorität: 30.01.2009 DE 102009006951
(43) Veröffentlichungstag der Anmeldung: 10.11.2010
(73) Patentinhaber: IGEL Electric GmbH, 48324 Sendenhorst (DE)
(72) Erfinder: WESTHOFF, Jörg, 48324 Sendenhorst (DE)
(74) Vertreter: Moser & Götze
(86) Internationale Anmeldenummer: PCT/EP2010/050989
(87) Internationale Veröffentlichungsnummer: WO 2010/086364

(56) Entgegenhaltungen:
- DE-A1- 3 641 259
- GB-A- 1 107 033

## Beschreibung

Die Erfindung betrifft eine Mittel- oder Hochspannungsschaltanlage mit einem Anlagengehäuse, mit einem Niederspannungssteuerteil, mit einem Kabelanschlussraum, mit einem Sammelschienensystem und mit einer in das Anlagengehäuse ein- und ausschiebbaren Einschubeinheit für Leistungsteile, wobei das Anlagengehäuse als ein vorne offenes äußeres Gehäuse ausgebildet ist und die Einschubeinheit derart ausgestaltet ist, dass diese in das Anlagengehäuse ein- und ausschiebbar ist.

Mittelspannungsschaltanlagen sind üblicherweise mit einer fest im Gehäuse eingebauten Niederspannungsnische für das jeweilige Niederspannungssteuerteil versehen. Im Gehäuse darunter angeordnet ist üblicherweise das Schalt- bzw. Leistungsteil angeordnet, wobei diese oft ausziehbar ausgestaltet sind. Desweiteren umfassen solche Schaltanlagen einen Druckkanal zum Ausblasen des Überdrucks im Störfall, einen Sammelschienenbereich für die Herstellung des elektrischen Kontakts und Versorgung der Leistungsteile mit Strom. Ebenfalls üblich ist es, einen Kabelanschlussbereich oder -raum vorzusehen, wo die Mittel- oder Hochspannung in die Anlage eingespeist wird. Zusätzlich ist die Verbindung des Niederspannungssteuerteils mit der Kundenanschlussleiste über mehrpolige Kabel vorgesehen, um die kundenseitigen Steuerleitungen mit dem Niederspannungsteil zu verbinden. Bei den bekannten Schaltanlagen sind diese Bereiche nach dem gleichen Muster in vier separat geschottete Bereiche oder Zellen unterteilt. Die ausziehbare Schaltkomponente dieser Anlagen bietet den Vorteil der einfachen Wartung und Austausch dieser Komponente.

So beschreiben die DE 1 949 932 A1, DE 31 05 261 C2 und DE 195 12 380 C2 und DE 3 641 259 entsprechende Schaltanlagen, bei denen das Schalt- bzw. Leistungsteil über einen Hubwagen ein- und ausschiebbar ist.

Zum Großteil treten Fehler aber auch in den anderen fest installierten Komponenten auf. Zur Fehlersuche muss die Anlage abgeschaltet werden und die einzelnen Bereiche und Komponenten im Schrank systematisch nach der Fehlerursache überprüft werden. Im Falle eines größeren Fehlers oder sogar Störlichtbogens muss die gesamte Schaltanlage deinstalliert werden und eine neue Anlage installiert werden. Das dauert in der Regel Wochen.

Die klassischen Schaltanlagen, wie auch aus DE 39 27 835 A1 oder DE 36 28 113 A1 und DE 25 15 152 A1 bekannt sind, weisen ein äußeres Anlagengehäuse mit Tür auf, das im Störfall die Umgebung schützt. Die Tür ist an dem Anlagengehäuse angeordnet und verschließt mit oder ohne eingeschobene Einschubeinheit das Anlagengehäuse so, dass im Störfall keine Gefahr für die Umgebung besteht. In der am Anlagengehäuse angeordneten Tür sind üblicherweise auch elektrische Komponenten vorhanden, die eine Störanfälligkeit besitzen, also ggf. zu warten und auszutauschen sind. Während dieser Zeit kann die Anlage entsprechend nicht verwendet werden.

Demgegenüber besteht die Aufgabe der vorliegenden Erfindung daher darin, eine Schaltanlage bereitzustellen, die eine schnelle und einfache regelmäßige Wartung und Fehlerbehebung im Störfall für alle elektrischen Komponenten erlaubt.

Diese Aufgabe wird durch die in Anspruch 1 wiedergegebene Schaltanlage gelöst.

Dadurch, dass die Einschubeinheit eine fest verbaute Vordertür zum hermetischen Abschluss der durch das Anlagengehäuse gebildeten Öffnung aufweist und das Einschubteil neben dem Leistungsteil den Niederspannungssteuerteil aufweist, befinden sich alle systemrelevanten Komponenten nur im Einschubteil, so dass ein Austausch der einzelnen Einschübe innerhalb kürzester Zeit und mit minimalem Personalaufwand gewährleistet ist. Darüber hinaus passen unterschiedlichste Einschübe in das gleiche Anlagengehäuse, so dass ein modulares System vorliegt. Dessen Konfiguration kann zu jeder Zeit und ohne Einschränkungen vor, während und nach der Inbetriebnahme geändert werden. Größer werdende Lasten, Änderungen in der Technik, Einführung neuer Technologien usw. können durch einen etwa nur 5 Minuten dauernden Austausch der Einschübe abgedeckt werden. Dies betrifft auch die ggf. in der Tür integrierten elektrischen Komponenten, da die Tür zusammen mit dem Einschub gewechselt wird.

Unter Mittelspannung wird vorliegend eine Spannung zwischen 3kV und 30kV verstanden. Unter Hochspannung wird vorliegend eine Spannung zwischen 30kV und 110kV verstanden.

In der Vordertür integriert befindet sich also quasi eine mit dem Einschubteil bewegliche Niederspannungsnische, die die gesamte Steuerung beinhalten soll.

Alle Verbindungen zur "Außenwelt" erfolgen somit nur über Steckkontakte, d.h. über Einfahrkontakte und das Sammelschienensystem für die Leistungsteile sowie Kabelsteckverbindungen (z.B. im Seitenholm) für die Niederspannungssteuerteile.

In einer besonders bevorzugten Ausführungsform sind die Leistungsteile Mittelspannungsschalt- und -verteilerkomponenten. Insbesondere weist die Einschubeinheit eine oder mehrere Leistungsteile aus der folgenden Gruppe auf Eingangsfeld, Motorstarter DOL, Sanftanlasser bis 6kV, Sanftanlasser bis 12kV, Motorstarter Stern/Dreieck, Motorstarter Autot rafo, Bypassfeld für Multi Motor Start, Koppelfeld, Kompensationsfeld.

Sinnvollerweise ist das Niederspannungssteuerteil zur Platzersparnis und gleichzeitigen optimalen Platzierung mit seinen Bedienungs- und Anzeigeelementen innerhalb des Leistungsteils aufgenommen. Dabei ist es bevorzugt, wenn das Niederspannungsteil zum Leistungsteil geschottet ist, so dass es im Störfall geschützt ist. Wie üblich ist das Niederspannungssteuerteil auch im geschlossenen, eingeschobenen Zustand der Einschubeinheit über eine Klappe oder Tür von der Vorderseite der Vordertür aus erreich- und wartbar. Seine elektrische und steuerungstechnische Verbindung erfolgt über ein in einem vorderen Seitenholm des Anlagengehäuses angeordnetes Verbindungsfeld bzw. Anschlussfeld, um eine elektrische Verbindung des Niederspannungssteuerteils mit den kundenseitigen Steuerleitungen herzustellen.

Die kundenseitigen Steuerleitungen werden z.B. aus dem Doppelboden kommend in den Seitenholm eingezogen und dort fest aufgelegt. Diese Verbindung kann auf Dauer verbleiben. Die lösliche Verbindung mit dem Niederspannungssteuerteil erfolgt, dann über das mehrpolige Kabel nach Art eines Patchfeldes. Zur Einnahme der Wartungsstellung wird die Verbindung über eine geeignete Anordnung automatisch beim Ausschieben der Einschubeinheit ausgesteckt.

Weiterhin ist es möglich, die Schaltanlage mit einer Vorrichtung zum Ausblasen des Überdrucks im Störfall auszurüsten. Insbesondere ist dies ein Druckkanal zur Verbindung mit einem externen Ausblasrohrsystem, so dass der Überdruck nicht etwa in den Schaltraum abgeführt wird.

Erfindungsgemäß ist das Anlagengehäuse organisatorisch in einen hinteren und vorderen Teil aufgeteilt.

In der bevorzugten Variante bilden der Kabelanschlussraum, das Sammelschienensystem und der Druckkanal den hinteren Teil des Anlagengehäuses aus. Dabei ist es sinnvoll, wenn der Kabelanschlussteilraum, das Sammelschienensystem und der Druckkanal übereinander liegend angeordnet sind, wobei der Kabelanschlussraum ganz unten und der Druckkanal ganz oben angeordnet sein können.

Der Kabelanschlussteilraum, das Sammelschienensystem und der Druckkanal sind dabei vorzugsweise zu einander in vertikaler Richtung geschottet. Diese Schottung weist sinnvollerweise in Richtung des Druckkanals öffnende Klappen auf.

Auch das Sammelschienensystem in zwei separate zueinander geschottete Bereiche getrennt ist, die unabhängig voneinander mit Strom versorgt werden können. Diese können jeweils mehrere z.B. drei, Energieverteilungsschienen aufweisen. Somit können die ersten Energieverteilungsschienen (inklusive der Gegenkontakte für den Einschubteil) des ersten Bereichs die Grundlast der Energieverteilung abdecken. Der zweite Bereich kann z.B. für eine Erhöhung der Stromtragfähigkeit des Systems, eine redundante Einspeisung, eine Startsequenz bei Soft Starter mit Multi Motor oder eine Einspeisung für Koppelfelder genutzt werden.

Die Sammelschienenbereiche sind wie üblich mit Schutter versehen, um sie auch zum Leistungsteil hin abtrennen zu können.

Durch den Wegfall der üblichen geschotteten Zellen innerhalb des Schrankes wird eine barrierefreie Installation aller Komponenten ermöglicht.

Filigrane Techniken zur Schottung und Abgrenzung der einzelnen Teile entfallen. Dadurch ist die gesamte Mechanik deutlich weniger anfällig für Fehler oder Abnutzungen und gewährleistet so einen langlebigen fehlerfreien und wartungsfreien Betrieb.

Der vordere Teil des Anlagengehäuses ist dagegen zur Aufnahme der Einschubeinheit ausgebildet. Er bildet quasi eine Art "Garage" für das Einschubteil mit einer Gesamttiefe des Einschubes aus.

Die Garage gewährleistet den Schutz der Einschubteile vor äußeren Einflüssen und stellt die Störlichtbogensicherheit in Verbindung mit der Vordertür des Einschubteils sicher. Sie stellt auch eine Führung und Arretierung der Einschubteile zusammen mit deren Vordertür bereit.

Die Einschubeinheit umfasst bevorzugterweise einen gerüstartigen Rahmen mit fest vorgebauter Vordertür. Somit können unterschiedliche Leistungskomponenten an dem Rahmen befestigt werden. Die Vordertür stellt im Zusammenspiel mit dem Anlagengehäuse bzw. dessen vorderen Teils eine wesentliche Sicherheitskomponente. So stellt die Tür im verriegelten Zustand sicher, dass davor befindliche Personen im Störfall unverletzt bleiben.

Die Vordertür verfügt also über eine geeignete Verriegelung und Dichtung, so dass die Tür in der Endposition des Einschubs durch Betätigung eines Hebels gegen das Anlagengehäuse verriegelt und einen hermetischen Abschluss der durch das Anlagengehäuse gebildeten Öffnung erreicht wird.

Die Schaltanlage weißt also einen Verriegelungsmechanismus zum hermetischen Abschluss der durch das Anlagengehäuse gebildeten Öffnung durch die Vordertür auf, der relativ zu einander verschiebbare Elemente an der Vordertür und dem Anlagengehäuse aufweist, von denen zumindest ein Teil mit in senkrecht zur Verschieberichtung schrägen Flächen derart versehen ist, dass beim Verschieben der Elemente gegeneinander zum Verriegeln die Vordertür gegen das Anlagengehäuse gezogen wird.

Dazu weißt das Anlagengehäuse an der vorderen Stirnseite mehrere umlaufend palzierte vorstehende Haken auf, die beim Einschieben der Einschubeinheit durch Langlöcher von verschiebbaren Schienen eines Schienensystems in der Tür bzw. deren Profile hindurchgreifen. In dieser Position liegen die Hakenmäuler der Haken so im Bereich der über den Verriegelungsmechanismus verschiebbaren Langlöcher der Schienen, dass diese bei beim Verriegeln mit ihren Kanten in die Hakenmäuler der einzelnen Haken hinein verschoben werden und eingreifen und dabei an einer im jeweiligen Hakenmaul vorgesehenen schrägen Flanke entlang gleiten, um somit die Tür gegen das Anlagengehäuse zu ziehen.

Desweiteren ist sowohl das Anlagengehäuse als auch die Einschubeinheit und deren Tür mit Dichtungen versehen, die sich im Störfall bei plötzlicher Druckerhöhung in der Anlage gegen das Gehäuse legen und die Dichtigkeit verstärken bzw. verbessern. So wird u.a. ausgenutzt, dass im Störfall bei plötzlicher Druckerhöhung sich die Tür verwindet, so dass die Innenseiten der an dem Anlagengehäuse anliegenden Holme von diesem abheben und sich entsprechend die Außenseiten an diesem andrücken.

Weitere Einzelheiten der Verriegelung und Dichtung ergeben sich aus der Beschreibung des Ausführungsbeispiels.

Das Einschubteil, das je nach Einschubvariante verschiedene technische Lösungen enthält, beinhaltet also alle elektrotechnisch relevanten Komponenten der Anlage. Das heißt praktisch alle Fehler treten in dem Einschubteil auf. Dieses steht auf Rollen oder ist auf einem Schienensystem mit oder ohne Kugellager angeordnet und kann somit innerhalb weniger Minuten komplett getauscht werden. Aufgrund der 0% zu 100% Fehlerverteilung der Komponenten ist eine Funktion nach dem Austausch des Einschubteils garantiert.

Das Anlagengehäuse als "Basiseinheit" enthält also außer Kupferschienen zur Energieverteilung (Inklusive Kontaktstelle für die Einschubeinheit) keine elektrotechnisch relevanten Teile. Das Fehlerrisiko der Kupferschienen liegt bei nahezu 0. Damit wird gewährleistet, dass die Grundeinheit nach erfolgter Installation unter keinen Umständen mehr verändert, gewartet oder repariert werden muss.

Das System bleibt bis zur völligen Mittel- oder Hochspannungslosigkeit geschlossen. Das heißt, bevor der Einschub ausgezogen werden kann, müssen erst die Leistungskontakte und die Steuerkontakte gelöst werden. Somit ist gewährleistet, dass jeder Systemfehler nur im Sicheren geschlossenen Zustand stattfinden kann. Im Notfall könnte der Einschub direkt getauscht werden und kurzfristig der Betrieb wieder aufgenommen werden.

Dieses Prinzip der Einschubeinheit gewährleistet folgende wesentliche Vorteile:
- Freier Zugang zu allen Komponenten nach Auszug.
- Mittel- bzw. Hochspannungsteil und Niederspannungssteuerung befinden sich in einer zusammenhängenden Komponente.
- Variable Systemlösungen auf einer gemeinsamen Plattform.

Im Fall eventueller Reparaturen und Servicearbeiten kann die Einschubeinheit herausgezogen werden und die anfallenden Arbeiten einfach von allen Seiten zugänglich durchgeführt werden. Der separate Kundenanschlussbereich und das Niederspannungssteuerteil erlauben einen freien Zugang auch während des Betriebes der Komponenten. Auch bei Konzeptänderungen müssen keine Leistungskabel oder kundenseitige Steuerleitungen neu verlegt werden.

Bevorzugterweise ist die Einschubeinheit mit Hilfe einer Hand- oder motorisierten Betätigung zwischen einer komplett bestromten Betriebsstellung, einer Teststellung mit Bestromung des Niederspannungssteuerteils und einer komplett stromlosen Wartungsstellung umstellbar ausgestaltet.

Die Anlage kennt also drei Stellungen:
1) Betrieb:
   In dieser Stellung sind die Leistungskontakte mit dem Versorgungsnetz über die Sammelschiene verbunden und die Steuerkontakte über Kabel im Anschlussfeld angeschlossen. Die Anlage funktioniert in dieser Stellung wie jede herkömmliche Schaltanlage.
2) Test:
   Mit Hilfe einer Hand- oder motorisierten Betätigung werden die Leistungskontakte von den Stromschienen getrennt. Nach dem Trennen fahren Schutter zu, so dass eine 100% sichere Trennung gewährleistet ist. Die Steuerung wird noch über die Steuerkontakte versorgt und kann somit alle relevanten Testzyklen fahren.
3) Service:
   In dieser Stellung werden auch die Steuerkontakte des Niederspannungssteuerteils getrennt und das Einschubteil ist frei zum Ausziehen. Gegebenenfalls muss die Steckverbindung dazu manuell oder automatisch getrennt werden.

Weitere Einzelheiten, Merkmale und Vorteile der Erfindung ergeben sich aus der nachfolgenden Beschreibung eines Ausführungsbeispiels anhand der einzigen Zeichnung, in der
- Fig. 1: eine schematische perspektivische Ansicht auf ein erfindungsgemäßes Anlagengehäuse zeigt;
- Fig. 2: eine schematische perspektivische Ansicht auf eine erfindungsgemäße Einschubeinheit zum Einschub in das in Figur 1 gezeigte Anlagengehäuse;
- Fig. 3: eine schematische Vorderansicht auf die Tür des Einschubs aus Fig. 1 und
- Fig. 4: eine schematische und geschnittene Seitenansicht auf den Bereich eines Verriegelungshakens im nicht verriegelten und verriegelten Zustand.

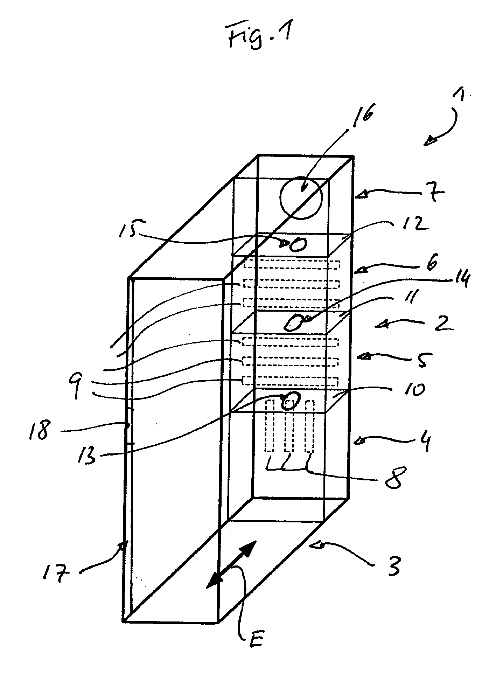

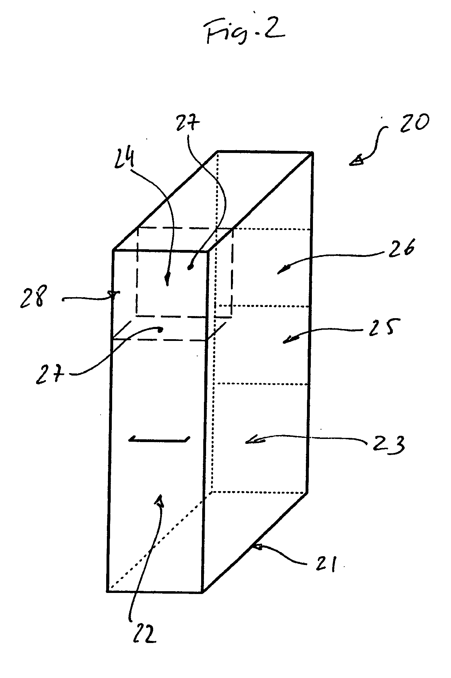

In den Figuren ist eine Mittelspannungsschaltanlage bzw. ihr Anlagengehäuse 1 (Figur 1) und die dazugehörige Einschubeinheit 20 (Figur 2) in einer schematischen perspektivischen Ansicht gezeigt, wobei die das Anlagengehäuse 1 und die ein- und ausschiebbare Einschubeinheit 20 zum besseren Verständnis "durchsichtig" dargestellt sind.

Das Anlagengehäuse 1 ist als ein vorne offenes äußeres Gehäuse ausgebildet, weist einen gerüstartigen Aufbau mit Holmen auf und ist organisatorisch in ein hinteren Teil 2 und vorderen Teil 3 aufgeteilt.

Ein Kabelanschlussraum 4, ein Sammelschienensystem 5, 6 und ein Druckkanal 7 bilden den hinteren Teil 3 des Anlagengehäuses 1. Der Kabelanschlussteilraum 4, das Sammelschienensystem 5,6 und der Druckkanal 7 sind in vertikaler Richtung übereinander liegend angeordnet.

Der unten angeordnete Kabelanschlussraum 4 dient zur Einspeisung der elektrischen Mittelspannung in die Schaltanlage und weist dazu Verbindungsfelder 8 auf, um von Außen zugeführte Kabel aufzulegen oder per Steckverbindung anzukoppeln.

Der ganz oben angeordnete Druckkanal 7 ist zur Verbindung mit einem externen Ausblasrohrsystem vorgesehen und dient zum Ausblasen des im Störfall entstehenden Überdrucks.

Das in der Mitte angeordnete Sammelschienensystem ist in zwei separate übereinanderliegende Bereiche 5, 6 getrennt, die unabhängig voneinander mit Strom versorgt werden können. Diese Bereiche 5, 6 weisen jeweils drei Energieverteilungsschienen 9 auf. Somit können die ersten Energieverteilungsschienen 9 (inklusive der entsprechenden Gegenkontakte für den Einschubteil) des ersten Bereichs 5 eine Grundlast der Energieverteilung abdecken. Der zweite Bereich 6 kann z.B. für eine Erhöhung der Stromtragfähigkeit des Systems, eine redundante Einspeisung, eine Startsequenz bei Soft Starter mit Multi Motor oder eine Einspeisung für Koppelfelder genutzt werden.

Der Kabelanschlussteilraum 4, die Sammelschienenbereiche 5 und 6 sowie der Druckkanal 7 sind zu einander in vertikaler Richtung durch Bleche 10, 11, 12 geschottet, die jeweils in Richtung des Druckkanals 7 öffnende Klappen 13, 14, 15 aufweisen.

Auch der Druckkanal 7 ist ebenfalls durch eine Klappe 29 vom vorderen Teil 3 getrennt.

Der Kabelanschlussraum 4 ist zum vorderen Teil 3 des Anlagengehäuses 1 hin offen. Dagegen sind die Sammelschienenbereiche 5 und 6 wie üblich mit (nicht dargestellten) Schutter versehen.

Somit wird der Überdruck im Störfall, je nach Entstehungsort, über die Klappen und/oder direkt über den Druckkanal 7 und einem Rohranschluss 16 in ein externes Rohrsystem abgeleitet, so dass der Schaltraum "unbelastet" bleibt.

Der vordere Teil 3 des Anlagengehäuses 1 dient zur Aufnahme der ein- und ausschiebbaren Einschubeinheit 20. Diese kann in Richtung des Pfeils E in das Anlagengehäuse 1 auf Rollen und/oder einem Schienensystem aus- bzw. eingeschoben werden.

Die Einschubeinheit 20 weist einen gerüstartigen Rahmen 21 mit fest vorgebauter Vordertür 22 auf. Der Rahmen 21 trägt die Leistungsteile 23. Die fest verbaute Vordertür 22 dient zum hermetischen Abschluss der durch das Anlagengehäuse 1 gebildeten Öffnung, so dass im Störfall vor der Anlage stehende Personen unbeeinträchtigt bleiben.

Da das Einschubteil 20 neben dem Leistungsteil 23 auch das Niederspannungssteuerteil 24 aufweist, befinden sich alle systemrelevanten Komponenten nur im Einschubteil 20, so dass ein Austausch der einzelnen Einschübe innerhalb kürzester Zeit und mit minimalem Personalaufwand gewährleistet werden kann, um einen Zugang zu den Komponenten zu ermöglichen. Zudem passen unterschiedlichste Einschübe in das gleiche Anlagengehäuse, so dass ein modulares System vorliegt. Dessen Konfiguration kann zu jeder Zeit und ohne Einschränkungen vor, während und nach der Inbetriebnahme geändert werden.

In der Vordertür 22 integriert befindet sich also quasi eine mit dem Einschubteil 20 bewegliche Niederspannungsnische 24, die die gesamte Steuerung beinhaltet.

Alle Verbindungen zur "Außenwelt" erfolgen somit nur über Steckkontakte, d.h. über (schematisch angedeutete) Einfahrkontakte 25, 26 an der Hinterseite der Einschubeinheit 20 und das Sammelschienensystem 5, 6 für die Leistungsteile 23 sowie Kabelsteckverbindungen für die Niederspannungssteuerteile 24.

Das Niederspannungssteuerteil 24 ist zur Platzersparnis und gleichzeitigen optimalen Platzierung mit seinen Bedienungs- und Anzeigeelementen innerhalb des Leistungsteils 23 aufgenommen. Dabei ist das Niederspannungsteil 24 zum Leistungsteil 23 durch entsprechende Bleche 27 geschottet, so dass es im Störfall geschützt ist. Wie üblich ist das Niederspannungssteuerteil 24 auch im geschlossenen, eingeschobenen Zustand der Einschubeinheit 20 über eine Klappe oder Tür 28 von der Vorderseite der Vordertür 22 aus erreich- und wartbar. Seine elektrische und steuerungstechnische Verbindung erfolgt über ein mehrpoliges Kabel, das in einem vorderen Seitenholm 17 des Anlagengehäuses 1 angeordnetes Verbindungsfeld bzw. Anschlussfeld 18 eingesteckt wird, um eine elektrische Verbindung des Niederspannungssteuerteils 24 mit den kundenseitigen Steuerleitungen herzustellen.

Die kundenseitigen Steuerleitungen werden z.B. aus dem Doppelboden kommend in den Seitenholm 17 eingezogen und im Anschlussfeld 18 fest aufgelegt. Diese Verbindung kann auf Dauer verbleiben. Die lösliche Verbindung mit dem Niederspannungssteuerteil 24 erfolgt, dann über das mehrpolige Kabel. Zur Einnahme der Wartungsstellung wird die Verbindung über eine geeignete Anordnung automatisch ausgesteckt.

Wie (oben) beschrieben ist die Einschubeinheit 20 mit Hilfe einer Hand- oder motorisierten Betätigung zwischen einer komplett bestromten Betriebsstellung, einer Teststellung mit Bestromung des Niederspannungssteuerteils 24 und einer komplett stromlosen Wartungsstellung umstellbar ausgestaltet.

Die Anlage kennt also drei Stellungen:
1) Betrieb:
   In dieser Stellung sind die Leistungskontakte 25, 26 mit den spannungsführenden Schienen 9 im Sammelschienenbereich 5, 6 verbunden und die Steuerkontakte im Anschlussfeld 18 verbunden. Die Anlage funktioniert in dieser Stellung wie jede herkömmliche Schaltanlage.
2) Test:
   Mit Hilfe einer Hand- oder motorisierten Betätigung werden die Leistungskontakte 25, 26 von den Stromschienen 9 getrennt. Nach dem Trennen fahren Schutter zu, so dass eine 100% sichere Trennung gewährleistet ist. Die Steuerung 24 wird noch über die Steuerkontakte 18 versorgt und kann somit alle relevanten Testzyklen fahren.
3) Service:
   In dieser Stellung werden auch die Steuerkontakte 18 des Niederspannungssteuerteils 24 getrennt und das Einschubteil 20 ist frei zum Ausziehen. Gegebenenfalls muss die Steckverbindung manuell oder automatisch getrennt werden.

Die Vordertür 22 verfügt also über eine geeignete Verriegelung und Dichtung, so dass die Tür in der Endposition der Einschubeinheit 20 durch Betätigung eines Verriegelungsmechanismus 30 gegen das Anlagengehäuse 1 verriegelt und einen hermetischen Abschluss der durch das Anlagengehäuse 1 gebildeten Öffnung erreicht wird.

Dazu weißt das Anlagengehäuse 1 an der vorderen Stirnseite mehrere umlaufend palzierte vorstehende Haken 31 auf, die jeweils in dem Seitenholm 17 befestigt sind.

Beim Einschieben der Einschubeinheit 20 greifen die Haken 31 durch Langlöcher 32 von verschiebbaren Schienen 33 eines Schienensystems 34 in der Tür 22 bzw. deren Profile 35 hindurch.

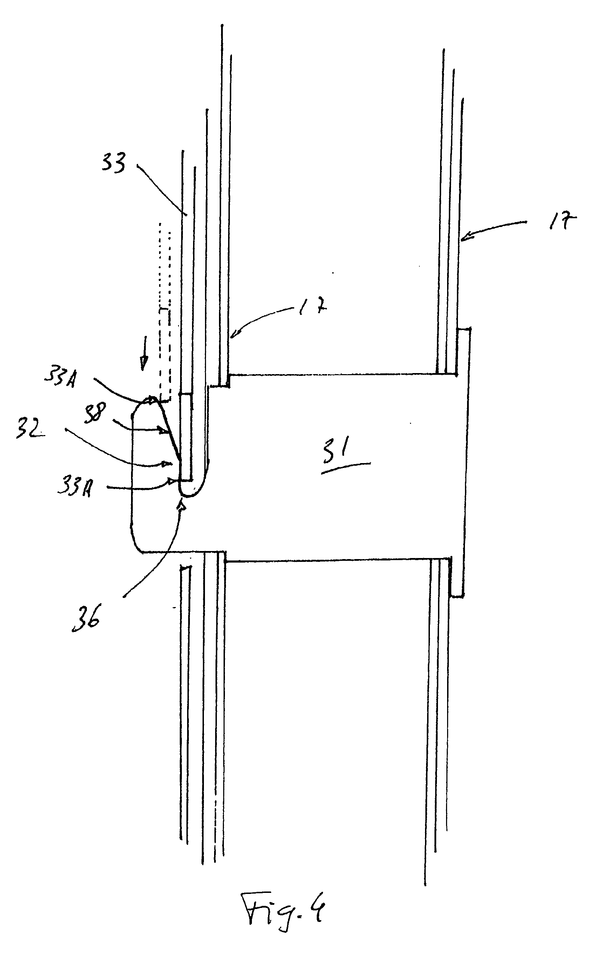

In dieser Position (gestrichelt angedeutet in Fig. 4) liegen die Hakenmäuler 36 der Haken 31 so im Bereich der über den Verriegelungsmechanismus 30 verschiebbaren Langlöcher 32 der Schienen 33, dass diese beim Verriegeln mit ihren Kanten 33A in die Hakenmäuler 36 der einzelnen Haken 31 hinein verschoben werden und eingreifen. Dabei gleiten die Kanten 33A an einer im jeweiligen Hakenmaul 36 vorgesehenen schrägen Flanke 38 entlang gleiten, um somit die Tür 22 gegen das Anlagengehäuse 1 zu ziehen.

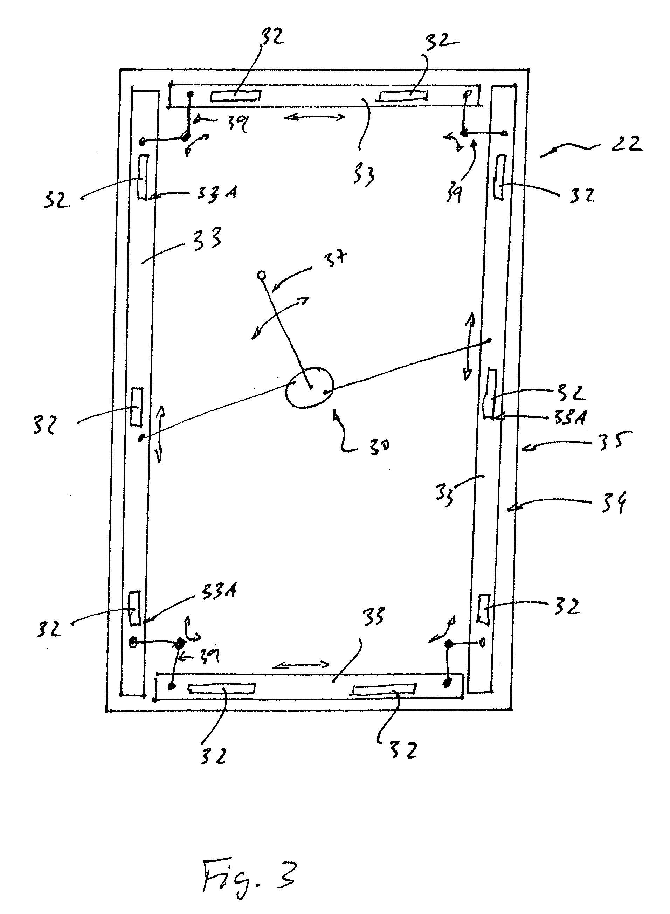

Das Verriegeln erfolgt durch Verdrehen eines Betätigungshebels 37, wodurch die Schienen 33 verschoben werden (siehe Pfeile in Fig. 3 und 4), wozu die Drehbewegung des Hebels 37 über ein Gestänge in eine Schubbewegung der Längsschienen 33 umgesetzt wird. Diese sind mittels Drehelementen 39 mit den Querschienen gekoppelt, so dass sich alle Schienen 33 gemeinsam verschieben lassen.

### Bezugszeichenliste

- 1: Anlagengehäuse
- 2: hinteren Teil
- 3: vorderen Teil
- 4: Kabelanschlussraum
- 5: Sammelschienensystem
- 6: Sammelschienensystem
- 7: Druckkanal
- 8: Verbindungsfelder
- 9: Energieverteilungsschienen
- 10: Blech
- 11: Blech
- 12: Blech
- 13: Klappen
- 14: Klappen
- 15: Klappen
- 16: Rohranschluss
- 17: Seitenholm
- 18: Anschlussfeld
- 20: Einschubeinheit
- 21: Rahmen
- 22: Vordertür
- 23: Leistungsteile
- 24: Niederspannungssteuerteil
- 25: Einfahrkontakte
- 26: Einfahrkontakte
- 27: Bleche
- 28: Tür
- 29: Klappe
- E: Ein- bzw. Ausschubrichtung
- 30: Verriegelungsmechanismus
- 31: Haken
- 32: Langloche
- 33: Schiene
- 33A: Kante
- 34: Schienensystem
- 35: Profile
- 36: Hakenmaul
- 37: Betätigungshebel
- 38: Flanke
- 39: Drehelement

## Patentansprüche

1. Mittel- oder Hochspannungsschaltanlage mit einem Anlagengehäuse (1), mit einem Niederspannungssteuerteil (24), mit einem Kabelanschlussraum (4), mit einem Sammelschienensystem (5, 6) und mit einer in das Anlagengehäuse (1) ein- und ausschiebbaren Einschubeinheit (20) für Leistungsteile (23), wobei das Anlagengehäuse (1) als ein vorne offenes äußeres Gehäuse ausgebildet ist und die Einschubeinheit (20) derart ausgestaltet ist, dass diese in das Anlagengehäuse (1) ein- und ausschiebbar ist, und die Einschubeinheit (20) eine fest verbaute Vordertür (22) zum hermetischen Abschluss der durch das Anlagengehäuse (1) gebildeten Öffnung aufweist, **dadurch gekennzeichnet, dass** das Einschubteil (20) neben dem Leistungsteil (23) den Niederspannungssteuerteil (24) aufweist.

2. Schaltanlage nach Anspruch 1, **dadurch gekennzeichnet, dass** das Niederspannungssteuerteil (24) innerhalb des Leistungsteils (23) aufgenommen ist.

3. Schaltanlage nach Anspruch 2, **dadurch gekennzeichnet, dass** das Niederspannungsteil (24) zum Leistungsteil (23) geschottet ist.

4. Schaltanlage nach einem der vorhergehenden Ansprüche, **dadurch gekennzeichnet, dass** das Anlagengehäuse (1) organisatorisch in eine hinteren (2) und vorderen (3) Teil aufgeteilt ist.

5. Schaltanlage nach Anspruch 4, **dadurch gekennzeichnet, dass** der Kabelanschlussteilraum (4), das Sammelschienensystem (5, 6) und ein Druckkanal (7) den hinteren Teil (2) des Anlagengehäuses (1) ausbilden.

6. Schaltanlage nach Anspruch 4 oder 5, **dadurch gekennzeichnet, dass** der vordere Teil (3) des Anlagengehäuses (1) zur Aufnahme der Einschubeinheit (20) ausgebildet ist.

7. Schaltanlage nach einem der Ansprüche 4 bis 6, **dadurch gekennzeichnet, dass** der Kabelanschlussteilraum (4), das Sammelschienensystem (5, 6) und der Druckkanal (7) übereinander liegend angeordnet sind.

8. Schaltanlage nach einem der Ansprüche 4 bis 7, **dadurch gekennzeichnet, dass** der Kabelanschlussteilraum (4), das Sammelschienensystem (5, 6) und der Druckkanal (7) zu einander in vertikaler Richtung geschottet sind.

9. Schaltanlage nach Anspruch 8, **dadurch gekennzeichnet, dass** die Schottung (10, 11, 12) in Richtung des Druckkanals (7) öffnende Klappen (13, 14, 15) aufweist.

10. Schaltanlage nach einem der vorhergehenden Ansprüche, **dadurch gekennzeichnet, dass** das Sammelschienensystem in zwei separate zueinander geschottete Bereiche (5, 6) getrennt ist, die unabhängig voneinander mit Strom versorgt werden können.

11. Schaltanlage nach einem der vorhergehenden Ansprüche, **dadurch gekennzeichnet, dass** die Einschubeinheit (20) einen gerüstartigen Rahmen (21) mit fest vorgebauter Vordertür (22) umfasst.

12. Schaltanlage nach einem der vorhergehenden Ansprüche, **dadurch gekennzeichnet, dass** in einem vorderen Seitenholm (17) des Anlagengehäuses (1) ein Verbindungsfeld (18) angeordnet ist, um eine elektrische Verbindung des Niederspannungssteuerteils (24) mit den kundenseitigen Steuerleitungen herzustellen.

13. Schaltanlage nach einem der vorhergehenden Ansprüche, **dadurch gekennzeichnet, dass** Rollen und/oder eine Schienenanordnung für das Ein- und Ausschieben vorgesehen ist.

14. Schaltanlage nach einem der vorhergehenden Ansprüche, **dadurch gekennzeichnet, dass** die Einschubeinheit (20) mit Hilfe einer Hand- oder motorisierten Betätigung zwischen einer komplett bestromten Betriebsstellung, einer Teststellung mit Bestromung des Niederspannungssteuerteils und komplett einer stromlosen Wartungsstellung verstellbar ausgestaltet ist.

15. Schaltanlage nach einem der vorhergehenden Ansprüche, **dadurch gekennzeichnet, dass** ein Verriegelungsmechanismus (3) zum hermetischen Abschluss der durch das Anlagengehäuse (1) gebildeten Öffnung durch die Vordertür (22) vorgesehen ist, der relativ zu einander verschiebbare Elemente an der Vordertür (22) und dem Anlagengehäuse (1) aufweist, von denen zumindest ein Teil mit in senkrecht zur Verschieberichtung schrägen Flächen derart versehen ist, dass beim Verschieben der Elemente gegeneinander zum Verriegeln die Vordertür (22) gegen das Anlagengehäuse (1) gezogen wird.

## Claims

1. Medium-voltage or high-voltage switchgear unit, having a housing (1), having a low-voltage control section (24), having a cable connection compartment (4), having a bus-bar system (5, 6) and having an insertable unit (20) for power components (23) which can be inserted in and withdrawn from the housing (1) of the unit, the housing (1) of the unit taking the form of an outer housing which is open at the front and the insertable unit (20) being so designed that it can be inserted in and withdrawn from the housing (1), and the insertable unit (20) having a front door (22) installed in a fixed position for hermetically sealing off the opening created by the housing (1) of the unit, **characterised in that** the insertable unit (20) has, as well as the power section (23), the low-voltage control section (24).

2. Switchgear unit according to claim 1, **characterised in that** the low-voltage control section (24) is accommodated within the power section (23).

3. Switchgear unit according to claim 2, **characterised in that** the low-voltage section (24) is partitioned off from the power section (23).

4. Switchgear unit according to one of the preceding claims, **characterised in that**, organisationally, the housing (1) of the unit is divided into a rear (2) and a front (3) portion.

5. Switchgear unit according to claim 4, **characterised in that** the cable connector compartment (4), the bus-bar system (5, 6), and a pressure-relieving passage (7) form the rear portion (2) of the housing (1) of the unit.

6. Switchgear unit according to claim 4 or 5, **characterised in that** the front portion (3) of the housing (1) of the unit is designed to receive the insertable unit (20).

7. Switchgear unit according to one of claims 4 to 6, **characterised in that** the cable connector compartment (4), the bus-bar system (5, 6) and the pressure-relieving passage (7) are arranged to lie one above another.

8. Switchgear unit according to one of claims 4 to 7, **characterised in that** the partitioning off from one another of the cable connector compartment (4), the bus-bar system (5, 6) and the pressure-relieving passage (7) is in the vertical direction.

9. Switchgear unit according to claim 8, **characterised in that** the partitioning (10, 11, 12) has flaps (13, 14, 15) which open towards the pressure-relieving passage (7).

10. Switchgear unit according to one of the preceding claims, **characterised in that** the bus-bar system is divided into separate two regions (5, 6) which are partitioned off from one another and which can be supplied with power independently of one another.

11. Switchgear unit according to one of the preceding claims, **characterised in that** the insertable unit (20) comprises a rack-like frame (21) having a front door (22) installed in a fixed position.

12. Switchgear unit according to one of the preceding claims, **characterised in that** a connecting area (18) is arranged in a front side-bar (17) of the housing (1) of the unit to allow an electrical connection to be made from the low-voltage control section (24) to the customer's control lines.

13. Switchgear unit according to one of the preceding claims, **characterised in that** rollers and/or a rail arrangement are provided for the insertion and withdrawal.

14. Switchgear unit according to one of the preceding claims, **characterised in that** the insertable unit (20) is designed to be adjustable, with the help of a manual or motorised actuating system, between a fully powered-up operating position, a test position in which there is power to the low-voltage control section, and a fully unpowered maintenance position.

15. Switchgear unit according to one of the preceding claims, **characterised in that** there is provided, for hermetically sealing off by means of the front door (22) the opening created by the housing (1) of the unit, a locking mechanism (3) which has members on the front door (22) and the housing (1) of the unit which are displaceable relative to one another and of which at least some are provided with faces inclined in the direction perpendicular to the direction of displacement, in such a way that, when the members are displaced relative to one another for locking, the front door (22) is drawn towards the housing (1) of the unit.

## Revendications

1. Installation de distribution électrique haute tension ou moyenne tension comportant un boîtier d'installation (1), un élément de commande basse tension (24), un espace de raccordement de câbles (4), un système de barres collectrices (5, 6) et une unité insérable (20) pouvant être insérée et extraite et destinée à des éléments de puissance (23), le boîtier d'installation (1) étant conformé en boîtier extérieur ouvert à l'avant et l'unité insérable (20) étant conformée de telle sorte qu'elle peut être insérée dans le boîtier d'installation (1) et extraite de celle-ci, et l'unité insérable (20) comportant une porte avant (22) intégrée de façon fixe et destinée à fermer hermétiquement l'ouverture ménagée dans le boîtier d'installation (1), **caractérisée en ce que** l'élément insérable (20) comporte, en plus de l'élément de puissance (23), l'élément de commande basse tension (24).

2. Installation de distribution électrique selon la revendication 1, **caractérisée en ce que** l'élément de commande basse tension (24) est reçu à l'intérieur de l'élément de puissance (23).

3. Installation de distribution électrique selon la revendication 2, **caractérisé en ce que** l'élément basse tension (24) est cloisonné par rapport à l'élément de puissance (23).

4. Installation de distribution électrique selon l'une des revendications précédentes, **caractérisée en ce que** le boîtier installation (1) est fonctionnellement divisé en une partie arrière (2) et une partie avant (3).

5. Installation de distribution électrique selon la revendication 4, **caractérisée en ce que** l'espace de raccordement de câbles (4), le système de barres collectrices (5, 6) et un canal sous pression (7) forment la partie arrière (2) du boîtier d'installation (1).

6. Installation de distribution électrique selon la revendication 4 ou 5, **caractérisée en ce que** la partie avant (3) du boîtier d'installation (1) est conformée pour recevoir l'unité insérable (20).

7. Installation de distribution électrique selon l'une des revendications 4 à 6, **caractérisée en ce que** l'espace de raccordement de câbles (4), le système de barres collectrices (5, 6) et le canal sous pression (7) sont disposés l'un au-dessus de l'autre.

8. Installation de distribution électrique selon l'une des revendications 4 à 7, **caractérisée en ce que** l'espace de raccordement de câbles (4), le système de barres collectrices (5, 6) et le canal sous pression (7) sont cloisonnés l'un par rapport à l'autre dans une direction verticale.

9. Installation de distribution électrique selon la revendication 8, **caractérisée en ce que** la cloison (10, 11, 12) comporte des volets (13, 14, 15) s'ouvrant en direction du canal sous pression (7).

10. Installation de distribution électrique selon l'une des revendications précédentes, **caractérisée en ce que** le système de barres collectrices divisé en deux zones (5, 6) séparées qui sont cloisonnées l'une par rapport à l'autre et qui peuvent être alimentée en courant indépendamment l'une de l'autre.

11. Installation de distribution électrique selon l'une des revendications précédentes, **caractérisée en ce que** l'unité insérable (20) comporte un châssis de type ossature (21) doté d'une porte avant (22) intégrée de façon fixe.

12. Installation de distribution électrique selon l'une des revendications précédentes, **caractérisée en ce qu'**une zone de connexion (18) est disposée dans un longeron latéral avant (17) du boîtier d'installation (1) pour établir une connexion électrique entre l'élément basse tension (24) et les lignes de commande côté client.

13. Installation de distribution électrique selon l'une des revendications précédentes, **caractérisée en ce que** des galets et/ou un agencement de glissière sont prévus pour l'insertion et l'extraction.

14. Installation de distribution électrique selon l'une des revendications précédentes, **caractérisée en ce que** l'unité insérable (20) est conformée de façon à être mobile par un actionnement manuel ou motorisé entre une position de fonctionnement avec alimentation complète, une position de test avec alimentation de l'élément de commande basse tension et une position d'entretien sans aucune alimentation.

15. Installation de distribution électrique selon l'une des revendications précédentes, **caractérisée en ce qu'**il est prévu un mécanisme de verrouillage (3) qui est destiné à fermer hermétiquement l'ouverture, ménagée dans le boîtier d'installation (1), au moyen de la porte avant (22) et qui comporte des éléments mobiles l'un par rapport à l'autre au niveau de la porte avant (22) et du boîtier d'installation (1) dont au moins une partie est dotée de faces obliques perpendiculaires à la direction de déplacement de sorte que, lorsque les éléments se déplacent l'un vers à l'autre pour effectuer le verrouillage, la porte avant (22) est tirée vers le boîtier d'installation (1).
